# EUROPÄISCHE PATENTSCHRIFT

(11) **EP 1 361 137 B1**
(45) Veröffentlichungstag und Bekanntmachung des Hinweises auf die Patenterteilung: **14.02.2007**
(21) Anmeldenummer: 03010279.2
(22) Anmeldetag: 07.05.2003
(51) Int. Cl.: B62D 1/181, B62D 1/19, B62D 1/18

(54) **Sicherheitslenkung und Betriebsverfahren dafür**
Safety steering and operating method therefor
Direction de sécurité et méthode de mise en oeuvre

(30) Priorität: 07.05.2002 DE 20207190 U
(43) Veröffentlichungstag der Anmeldung: 12.11.2003
(73) Patentinhaber: ThyssenKrupp Presta AG, 9492 Eschen (LI)
(72) Erfinder: Müller, Olaf, 65428 Rüsselsheim (DE)
(74) Vertreter: Lindner, Manfred Klaus

(56) Entgegenhaltungen:
- WO-A-00/76832
- WO-A-01/64497
- DE-A- 4 344 681
- DE-A- 19 829 238
- US-B1- 6 264 239

## Beschreibung

Die Erfindung betrifft Sicherheitslenkung und Betriebsverfahren dafür gemäß den Oberbegriffen der unabhängigen Ansprüche 1 und 2.

Die Erfindung bildet Ausgestaltungen fort von und ist anwendbar in Verbindung mit Lenkungen gemäß den internationalen Patentanmeldungen PCT/DE 99/01000, PCT/DE 01/00746, PCT/DE 01/00737, PCT/DE 00/01889 und PCT/DE 00/02286.

Es sind zahlreiche Sicherheitslenksäulen und Betriebsverfahren dafür bekannt geworden, um die Fahrer von Kraftfahrzeugen in Unfallsituationen besser zu schützen. Diesbezüglich sind in der Praxis bekannt geworden Sicherheitslenkungen mit einer Lenksäule, einer Lenksäulen-Komfortverstellung, die Linearstelleinrichtungen enthält, und Sicherheitseinrichtungen, die ausgelegt sind, dass in einer Unfallsituation wenigstens ein Lenksäulenendbereich von einer Fahrerposition wegbewegt werden kann.

Auf diesem technischen Gebiet geht es darum, Menschen vor Verletzungen und vor allem auch Todesfolgen bei Unfällen zu bewahren. Daher ist es ein fortwährendes Ziel, das auch der vorliegenden Erfindung zu Grunde liegt, Sicherheitslenksäulen und Betriebsverfahren dafür weiter zu verbessern, um Menschen und insbesondere die immer anwesenden Fahrer in Kraftfahrzeugen noch besser zu schützen.

Dieses Ziel wird erreicht mit einer Sicherheitslenkung mit einer Lenksäule, einer Lenksäulen-Komfortverstellung, die Linearstelleinrichtungen enthält, und Sicherheitseinrichtungen, die ausgelegt sind, dass in einer Unfallsituation wenigstens ein Lenksäulenendbereich von einer Fahrerposition wegbewegt werden kann, wobei die Linearstelleinrichtungen Lastabsorptionseinrichtungen und/oder Rückzugseinrichtungen bezüglich der Bewegung wenigstens des Lenksäulenendbereiches von einer Fahrerposition weg enthalten.

Weiterhin wird das angegebene Ziel erreicht mit einem Betriebsverfahren für eine Sicherheitslenkung mit einer Lenksäule, die durch eine Komfortverstellung entsprechend den Anforderungen und/oder Wünschen eines Fahrers mittels Linearstelleinrichtungen einstellbar ist und von der in einer Unfallsituation wenigstens ein Lenksäulenendbereich von einer Fahrerposition wegbewegt wird, wobei die Bewegung wenigstens des Lenksäulenendbereiches in einer Unfallsituation von einer Fahrerposition weg lastaufnehmend gebremst wird durch Lastabsorptionseinrichtungen und/oder veranlasst wird durch Rückzugseinrichtungen, die jeweils in den Linearstelleinrichtungen enthalten oder unmittelbar daran anschließend angeordnet sind.

Durch die Erfindung werden eine Sicherheitslenkung gemäß Anspruch 1 und ein Betriebsverfahren gemäß Anspruch 2 dafür geschaffen, die die Sicherheit für Fahrer von Kraftfahrzeugen weiter erhöhen. In besonders vorteilhafter Weise wird dabei der Bauraum für die Linearstelleinrichtungen der Komfortverstellung in Richtung der Zentralachse der Lenksäule für Lastabsorptionseinrichtungen und/oder Rückzugseinrichtungen genutzt. Dies führt zu einer sehr kompakten Bauweise, die einerseits Raum und Gewicht und somit Kosten spart und andererseits mehr Raum für den Fahrer zulässt, dessen Verletzungsrisiko damit weiter reduziert wird.

In Weiterbildung der Erfindung kann mit Vorzug bei der erfindungsgemäßen Sicherheitslenkung vorgesehen sein, dass die Linearstelleinrichtungen einen Spindelantrieb oder einen Zahnstangenantrieb enthalten, und dass die Lastabsorptionseinrichtungen und/oder Rückzugseinrichtungen in eine entsprechende Gewindespindel bzw. eine Zahnstange integriert sind oder sich unmittelbar daran anschließen.

Gemäß einer anderen vorzugsweisen Ausgestaltung ist vorgesehen, dass die Lastabsorptionseinrichtungen wenigstens eine Einheit mit einem Zylinder und einem Kolben enthalten, der in dem Zylinder so verschiebbar ist, dass in einer Unfallsituation wenigstens ein Lenksäulenendbereich von einer Fahrerposition wegbewegt werden kann, und dass im Verschiebeweg des Kolbens im Zylinder Widerstandseinrichtungen zur Lastaufnahme vorgesehen und insbesondere einstellbar sind. Insbesondere kann dabei weiter vorgesehen sein, dass die Widerstandseinrichtungen wenigstens ein stauchbares Wellrohr, insbesondere gesteuert und bevorzugt pyrotechnisch oder elektromagnetisch aktivierbare Schälmesser und/oder eine vorzugsweise steuerbare Düsen- oder Ventilanordnung zum entsprechend ggf. steuerbaren Drosseln einer Fluiddurchströmung enthalten.

Eine weitere bevorzugte Ausgestaltung der vorliegenden Erfindung besteht darin, dass die Rückzugseinrichtungen wenigstens eine Einheit mit einem Zylinder und einem Kolben enthalten, der vorzugsweise pyrotechnisch angetrieben in dem Zylinder so verschiebbar ist, dass in einer Unfallsituation wenigstens ein Lenksäulenendbereich von einer Fahrerposition wegbewegt werden kann. Dabei kann insbesondere weiter vorgesehen sein, dass die Rückzugseinrichtungen ausgelegt sind, um zu Beginn, während und/oder nach einer Unfallsituation wenigstens den Lenksäulenendbereich von einer Fahrerposition vorzugsweise steuerbar hinsichtlich Start, Geschwindigkeit und/oder Verstellweglänge wegzubewegen, wobei die Rückzugseinrichtungen vorzugsweise ferner ausgelegt sind, um nach einer vorgebbaren Zeit nach Beginn der Unfallsituation unabhängig von vorangegangenen Rückzugsbewegungen und Lastabsorptionen einen maximalen Rückzug wenigstens des Lenksäulenendbereiches von der Fahrerposition weg einzustellen.

Entsprechende vorstehende vorzugsweise Ausgestaltungen können dadurch weitergebildet sein, dass der Kolben mit dem Zylinder durch eine Umfangsverzahnung drehfest bezüglich einer Drehung um die Längsachse des Zylinders miteinander verbunden sind. Alternativ oder zusätzlich kann bei solchen Bauarten vorgesehen sein, dass der Kolben durch Abreißniete jedenfalls bis zum Eintreten einer Unfallsituation verschiebefest und drehfest bezüglich einer Drehung um die Längsachse des Zylinders in dem Zylinder fixiert ist.

Weiterhin ist es bevorzugt, wenn die Lastabsorptionseinrichtungen und/oder die Rückzugseinrichtungen zu Beginn und/oder in einer Unfallsituation insassenabhängig einstellbar und/oder veränderbar sind.

Noch eine weitere bevorzugte Ausgestaltung der Erfindung besteht darin, dass die Linearstelleinrichtungen ausgelegt sind, eine Verstellung wenigstens des Lenksäulenendbereiches der Lenksäule sowohl längs deren Zentralachse als auch quer dazu in zumindest im wesentlichen Vertikalrichtungen zu ermöglichen. Dabei ist ferner insbesondere vorgesehen, dass die Linearstelleinrichtungen einen Längsverstellantrieb mit einem Längsverstell-Spindelantrieb oder -Zahnstangenantrieb und einen Vertikalverstellantrieb mit einem Vertikalverstell-Spindelantrieb oder -Zahnstangenantrieb enthalten. Weiter kann dabei vorzugsweise vorgesehen sein, dass die Linearstelleinrichtungen einen gemeinsamen Antriebsmotor für den Längsverstellantrieb und den Vertikalverstellantrieb enthalten, die über Kupplungseinrichtungen alternativ mit dem Antriebsmotor koppelbar sind, wobei die Kupplungseinrichtungen bevorzugt ausgelegt sind zwischen den Längs- und Vertikalverstellantrieben hin und her zu schalten oder den Längs- oder Vertikalverstellantrieb konkret jeweils einzeln ein- oder auszuschalten. Mit weiteren Vorteilen kann vorgesehen sein, dass der Längsverstellantrieb, insbesondere dessen Längsverstell-Spindelantrieb oder -Zahnstangenantrieb, und der Vertikalverstellantrieb, insbesondere dessen Vertikalverstell-Spindelantrieb oder -Zahnstangenantrieb längs einer gemeinsamen Achse hintereinander angeordnet sind, und dass vorzugsweise ggf. die Kupplungseinrichtungen zwischen den Längs- und Vertikalverstellantrieben angeordnet sind, um eine wahlweise Kopplung des Antriebsmotors an den Längs- oder Vertikalverstellantrieb zu ermöglichen. Außerdem besteht noch eine weitere Ausgestaltungsmöglichkeit darin, dass der Vertikalverstellantrieb eine Hebelanordnung, insbesondere eine Knickhebel- oder Scherenanordnung enthält, die so einerseits mit dem Vertikalverstell-Spindelantrieb oder -Zahnstangenantrieb und andererseits einer im Fahrzeug ortsfesten Lagerung gekoppelt ist, dass die Hebelanordnung bei Betätigung des Vertikalverstellantriebes durch Schwenken um die ortsfeste Lagerung im Fahrzeug eine Vertikalbewegung der Lenksäule veranlasst.

Weitere vorteilhafte und bevorzugte Ausgestaltungen der Erfindung ergeben sich aus den abhängigen Ansprüchen und deren Kombinationen sowie den Angaben in der vorliegenden Beschreibung sowohl zu konkreten Ausgestaltungen, als auch bezüglich allgemeinen Grundsatzmaßnahmen.

Die vorliegende Erfindung schafft konzeptionell und insbesondere in konkreten Ausgestaltungen vereinfachte, bei Crash lastabsorbierende und/oder elektrisch verstellbare Lenkungen. Dabei bedient sich die vorliegende Erfindung verschiedener Aspekte, die vorteilhafterweise in jeglicher Kombination zu wesentlichen Verbesserungen der Sicherheit für Fahrer von Kraftfahrzeugen führen, jeweils aber auch für sich einzeln als gesonderte Erfindung, d.h. insbesondere auch unabhängig von den jeweils anderen Aspekten der vorliegenden Erfindung, angesehen werden können und schutzwürdig sind:

### 1. Lastabsorption bei Crash im Verstellantrieb der Komfortverstellung:

Die Aufschlaglast auf die Lenkung beim Crash wird bei heute in der Praxis bekannten Lenkungen üblicherweise von einem Schlitten aufgenommen, der ein Blech energievernichtend verformt. Die Erfindung schafft hier Kostenersparnisse und weiter erhöhte Sicherheit, indem zur Vereinfachung der Lastabsorption letztere z.B. in die Antriebsspindel der Linearstelleinrichtungen verlegt wird. Die Integration der Lastabsorption in die Antriebsspindel vereinfacht ferner wesentlich den Aufbau insbesondere einer elektrisch verstellbaren Lenkung mit Lastabsorption.

Weitere beispielhafte Maßnahmen dieses Aspektes der vorliegenden Erfindung sind:
- Die Lenksäule der Sicherheitslenkung ist derart ausgestaltet, dass die Verstellglieder insbesondere in genau vorgegebener Weise verformbar sind.
- Es ist ein solches Verstellglied enthalten, das als Spindel ausgelegt ist, die streckenweise durch ein verformbares Wellrohr gebildet ist.
- Es ist ein solches Verstellglied enthalten, bei dem eine Mitnehmerwelle der Längsverstellung der Lenksäule mit einer Kolben-Zylinder-Einheit ausgeführt ist, deren Kolben in einer Unfallsituation eine Flüssigkeit oder ein Fluid nach Art eines Stoßdämpfers durch ein Ventil schieben muss. Bei höheren auftretenden Geschwindigkeiten oder eben einem stärkeren Unfallaufprall erhöht sich naturgemäß der Durchströmwiderstand der Flüssigkeit durch das Ventil.
   Damit der Kolben bei Drehung den Zylinder mitnimmt, ist für diese beiden Elemente mit besonderem Vorzug eine formschlüssige Verbindung beispielsweise mittels einer Verzahnung vorgesehen.
- Es ist ein solches Verstellglied enthalten, bei dem eine Mitnehmerwelle der Längsverstellung der Lenksäule mit einer Kolben-Zylinder-Einheit ausgeführt ist, deren Kolben in einer Unfallsituation eine Flüssigkeit oder ein Fluid nach Art eines Stoßdämpfers durch ein Ventil schieben muss. Zur besseren Anpassung der dadurch erreichten Dämpfung oder Lastaufnahme an konkrete Unfallumstände und Insassenparameter kann der Durchströmquerschnitt des Ventils beispielsweise mittels einer in dessen Durchströmöffnung verschiebbar angeordneten und im Durchmesser konischen Nadel verändert werden. Somit wird nicht nur geschwindigkeitsabhängig unter Nutzung der Flüssigkeits- oder Fluideigenschaften, sondern auch durch die insbesondere in Abhängigkeit von Insassenparametern steuerbare Nadel der Widerstand des Durchströmventils zur optimierten Dämpfung oder Lastabsorption ausgenutzt bzw. herangezogen.
   Damit der Kolben bei Drehung den Zylinder mitnimmt, ist für diese beiden Elemente wiederum mit besonderem Vorzug eine formschlüssige Verbindung beispielsweise mittels einer Verzahnung vorgesehen.
- Das Ventil der vorstehenden Varianten wird elektrisch oder elektromagnetisch in der Art eines Servoventils gesteuert, so dass einer an eine konkret gegebene Unfallschwere und/oder an bestehende Insassenparameter angepassten Lastaufnahme oder Dämpfung durch eine entsprechende Durchströmeinstellung des Ventils Rechnung getragen wird.

### 2. Schaltbare Lastabsorption auf z.B. zwei gleichbleibenden Größen und/oder Vorbewegung der Lenkung bei kleinen Personen und/oder in einer zweiten Crashphase:

Aktuell aus der Praxis bekannte Lenkungen haben üblicherweise nur eine Lastabsorptionsgröße, die der Auslegung eines zu verformenden Bleches entspricht. Die Erfindung führt dagegen zu einer deutlich erhöhten Sicherheit. Eine diesbezügliche exemplarische Lösungsvariante der Erfindung besteht in einer Variation der Lastabsorption auf z.B. zwei Niveaus und nach unten Fahren bei kleiner Person und in der zweiten Crashphase, wenn die Fahrzeugstirnwand und damit die Lenkung in das Fahrzeuginnere eindringt. Eine "intelligent" schaltbare Lastabsorption und Bewegung in einem kompakten Kolben lässt crashabhängig z.B. auf besonders einfache und kostengünstige Weise drei Lastabsorptionspegel zu und zusätzlich das Wegfahren der Lenkung bei kleinen Personen und in der zweiten Crashphase.

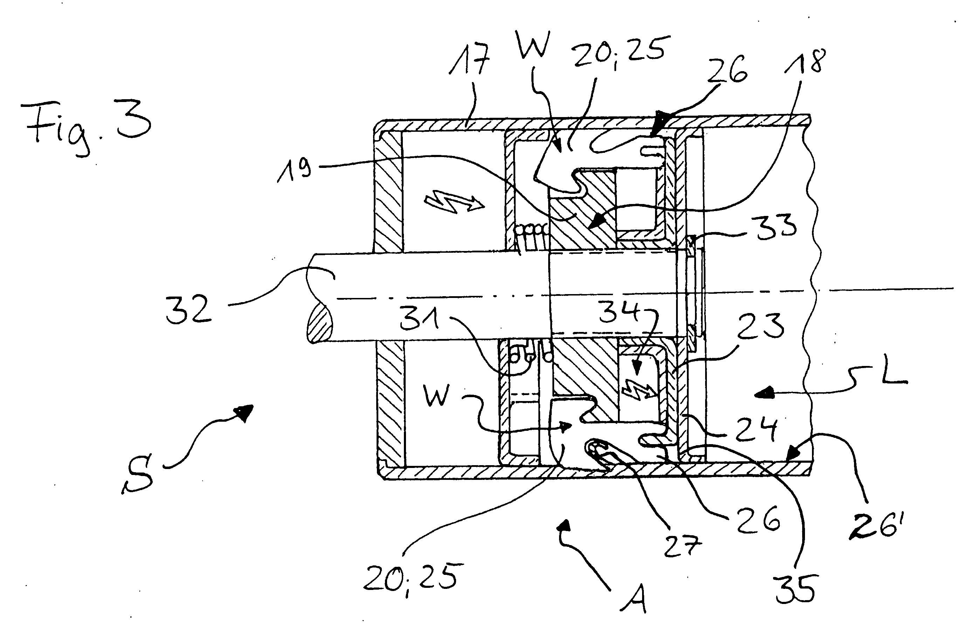

Weitere beispielhafte Maßnahmen dieses Aspektes der vorliegenden Erfindung sind:
- Die Lenksäule der Sicherheitslenkung ist derart ausgestaltet, dass sich ihre Lastabsorption für den Insassen in Abhängigkeit von den Parametern des Insassen im Verlauf einer Unfallsituation einstellen lässt.
- Die Lenksäule der Sicherheitslenkung ist derart ausgestaltet, dass sich ihre Lage im Verlauf einer Unfallsituation verändern lässt.
- Die Lenksäule der Sicherheitslenkung ist derart ausgestaltet, dass sie in der Endphase eines Unfalles grundsätzlich maximal vom Fahrer weg gefahren und/oder gestaucht wird, um dessen Überlebensraum möglichst groß zu gestalten und mit dem zusätzlichen Vorteil, dass zusätzlicher Platz für Rettungsmaßnahmen geschaffen wird.
- Die Lenksäule der Sicherheitslenkung ist derart ausgestaltet, dass eine Verstellwelle ihrer vorzugsweise elektrisch betriebenen Komfortverstellung mit einer Lastabsorptions- und Lageoptimierungsmechanik oder allgemeiner ausgedrückt entsprechenden Einrichtungen ausgestattet ist. Insbesondere ist eine solche Lastabsorptions- und Lageoptimierungsmechanik in eine sich verschiebende Zentralnabe der Lenksäule.
- Der Sicherheitslenkung sind Detektions- und Steuereinrichtungen vorzugsweise mit elektrischer oder elektronischer Datenermittlung, -übertragung und -verarbeitung zugeordnet, um den Betrieb von Lastabsorptionseinrichtungen und/oder Rückzugseinrichtungen in Abhängigkeit von Unfallumständen und/oder Insassenparametern gezielt steuern zu können.
   Solche Detektions- und Steuereinrichtungen zur Erkennung und Verarbeitung von Lage- und Gewichtsdaten oder jeglichen anderen Insassenparametern, wie z.B. Angurtzustand, ausgelegt sein. Die Folge beispielsweise einer Feststellung einer kleinen Person ist, dass z.B. keine Lastabsorption, aber schon ein Rückzug zumindest des Lenksäulenendbereiches von einer Fahrerposition weg, oder anders ausgedrückt in dem Fahrzeug nach vorne, in einer Unfallsituation stattfindet.
- Die Lastabsorptionseinrichtungen enthalten Messer oder Schälmesser, die jeweils einen Span aus dem Zylinder oder genauer dessen Rohrwandung, durch den bzw. längs der sie geschoben werden, unter Lastaufzehrung herausschälen.
   Vorzugsweise ist die Dicke des herauszuschälenden Spans genau vorgegeben durch einen Anschlag und eine diesbezügliche Ausgestaltung des Schälmessers.
   Eine weitere bevorzugte Ausgestaltung besteht darin, dass einzelne oder Gruppen von solchen Schälmessern insbesondere in Abhängigkeit von Unfallumständen und/oder Insassenparametern gezielt steuerbar einsetzbar oder wirkungslos gehalten werden, wofür entsprechende Detektions- und Steuereinrichtungen vorzugsweise mit elektrischer oder elektronischer Datenermittlung, -übertragung und -verarbeitung vorgesehen sind.
   Mit Vorzug wird die Wirkung oder Funktion der Schälmesser durch ein Stellglied oder eine Mehrzahl von Stellgliedern gesteuert, das bzw. die durch pyrotechnischen Druck in vorgewählter oder vorwählbarer Weise verstellt werden und dadurch die Wirkung/Funktion einzelner Messer oder von Gruppen von Messern freigibt oder blockiert.
   Die Gestaltung solcher Stellglieder kann in Form von Platten mit Verriegelungssegmenten erfolgen, die in Aussparungen der Messer gedreht werden können.
   Es können mehrere solche Stellglieder hintereinander geschaltet sein (z.B. zweifach, vergleiche Fig. 3, 4 und 5).
   Die Messer und Stellglieder können mit Vorteil in oder an einem Kolben untergebracht sein.
   Alternativ zu einer pyrotechnischen Steuerung des Einsatzes der Schälmesser, können letztere auch durch elektromagnetische Stelleinrichtungen in oder außer Wirkung gebracht oder gehalten/blockiert werden.
- Fixierung eines Kolbens als Bestandteil der Lastabsorptionseinrichtungen und/oder Rückzugseinrichtungen in seinem Zylinder, der wiederum Bestandteil der z.B. Verstellwelle der Linearstelleinrichtungen ist, um deren Funktion zu gewährleisten.
- Es kann ein Kolbens in verschiebbaren Rohren einer Lenkung an sich vorgesehen sein, ohne dass es eines gesonderten Zylinders bedarf. Zur Verstellung von Lastabsorptionseinrichtungen (z.B. wie oben mittels Schälmessern) und/oder Rückzugseinrichtungen durch Pyrotechnik ist dann wenigstens eine abstützende Zwischenwand zum Aufbau des erforderlichen Gegendruckes erforderlich.
- Der Kolben kann genutzt werden, um dahinter pyrotechnisch Druck aufzubauen, um die z.B. Verstellwelle der Linearstelleinrichtungen bei elektrisch verstellbarer Lenkung oder die Lenkrohre bei einer normalen Lenkung in einer Unfallsituation nach vorne vom Fahrer weg zu bewegen (Rückzugseinrichtungen).

### 3. Elektrisch verstellbare Lenkung in zwei Ebenen (vier Richtungen) mit nur einem Motor:

Heutzutage in der Praxis bekannte elektrisch verstellbare Lenkungen werden üblicherweise in vier Richtungen mit zwei Elektrogetriebemotoren verstellt. Durch die Erfindung werden Gewicht, Bauraum und Kosten gespart, indem die Verstellung in vier Richtungen mit nur einem entsprechend umschaltbaren Motor erreicht wird.

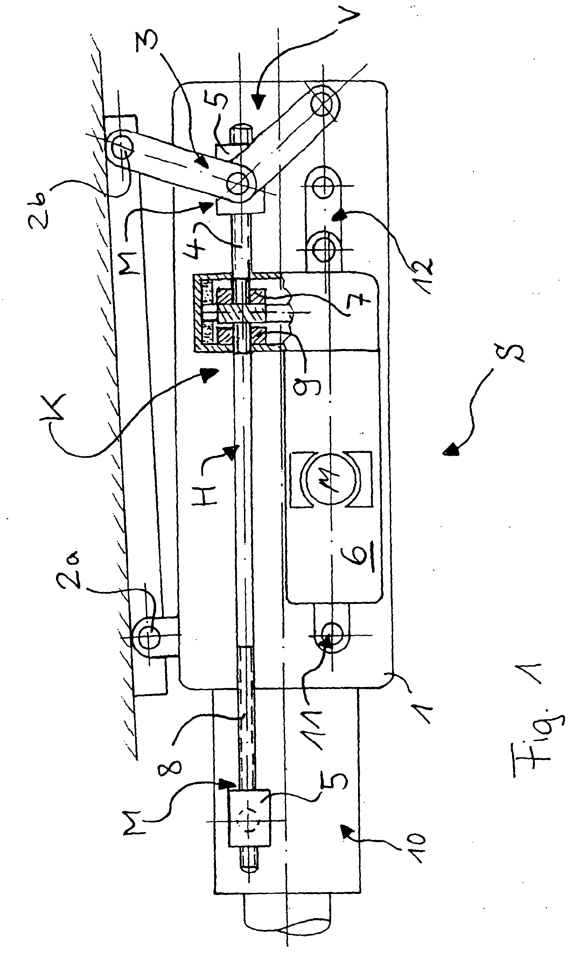

Weitere beispielhafte Maßnahmen dieses Aspektes der vorliegenden Erfindung sind:
- Der Motor kann derart ausgestaltet und eingesetzt sein, dass eine elektrisch oder mechanisch schaltbare Kupplung alternativ entweder die Längsverstellung oder die Höhenverstellung der Lenksäule mittels Vor- oder Rückwärtslauf bewirkt.
- Die Längsverstellung kann dadurch realisiert sein, dass eine Gewindespindel eine an der beweglichen Lenksäule oder an einem beweglichen Lenksäulenteil angebrachte Mutter und damit die Lenksäule bzw. das Lenksäulenteil vorwärts oder rückwärts bewegt.
- Die Höhenverstellung kann dadurch realisiert sein, dass eine Gewindespindel an einem Knickhebelpaar derart angreift, dass die Hebel mehr oder weniger zueinander gestreckt oder gegeneinander geknickt werden und sich damit der Abstand oder der Winkel zwischen Karosserie und Lenksäule in einer gewünschten Richtung ändert.
   Besonders stabil ist eine Bauart mit Knickhebeln dann, wenn gegenläufige oder mehrfache Systeme von Knickhebeln eingesetzt werden.
- Die Bauart der insbesondere elektrischen Verstellung der Lenksäule kann derart sein, dass die Längsantriebsmechanik und der Verstellmotor, oder allgemeiner die entsprechenden Linearstelleinrichtungen, derart an der Lenksäule schwenkbar angebracht sind, dass der Motor und z.B. die Spindel zumindest im wesentlichen frei von Querkräften bleiben.
   Zu diesem Zweck kann eine Motor- und ggf. Getriebeeinheit mit einem Lageausgleich versehen sein (siehe Fig. 1).
- Die Höhenverstellung kann auch mit den grundsätzlichen erfindungsgemäßen Vorteilen realisiert werden unter Verwendung eines Winkelgetriebes, wobei dabei zu verwendende Muttern (z.B. Laufmuttern an einer Spindel) schwenkbar auszuführen sind.

Die Erfindung wird nachfolgend lediglich exemplarisch anhand von Ausführungsbeispielen unter Bezugnahme auf die Zeichnung näher erläutert. In der Zeichnung zeigen:
- Fig. 1: ein erstes Ausführungsbeispiel einer Sicherheitslenkung ausschnittweise in einer Querschnittdarstellung,
- Fig. 2: ein zweites Ausführungsbeispiel einer Sicherheitslenkung ausschnittweise in einer Querschnittdarstellung,
- Fig. 3: ein drittes Ausführungsbeispiel einer Sicherheitslenkung ausschnittweise in einer gegenüber den Ansichten in den Fig. 1 und 2 vergrößerten Querschnittdarstellung,
- Fig. 4: eine Ansicht eines ersten Details des dritten Ausführungsbeispiels in einer Draufsicht,
- Fig. 5: eine Ansicht eines zweiten Details des dritten Ausführungsbeispiels in einer Draufsicht,
- Fig. 6: eine Ansicht eines dritten Details des dritten Ausführungsbeispiels in einer Draufsicht, und
- Fig. 7: ein viertes Ausführungsbeispiel einer Sicherheitslenkung ausschnittweise in einer Querschnittdarstellung.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Die Fig. 1 zeigt in einer ausschnittweisen Querschnittdarstellung die Aufhängung eines ersten Ausführungsbeispiels einer Sicherheitslenkung S eines Lenkungsgehäuses 1 einer Lenksäule 10 an zwei Anlenkungen 2a und 2b und zwei durch "Einknicken" in der Länge veränderbaren Doppelhebeln als sogenannten Knickhebel 3. Eine Vertikalverstell-Gewindespindel 4 verkürzt die je nach Bewegungsrichtung der Vertikalverstell-Gewindespindel 4 auseinander oder gegeneinander schwenkenden Knickhebel 3, die an einer Mutter 5 befestigt sind. Damit wird das Lenkgehäuse 1 nach oben bzw. unten geschwenkt. Dazu wird die Vertikalverstell-Gewindespindel 4 (Auf/Ab-Bewegung der Lenksäule 10) angetrieben von einem Verstellmotor 6, der mittels einer Vertikalverstell-Kupplung 7 mit der Vertikalverstell-Gewindespindel 4 verbunden wird.

Bei Umschalten auf eine Längsverstell-Kupplung 9 und damit eine Längsverstell-Gewindespindel 8 (Vor/Zurück-Bewegung der Lenksäule 10) entsteht eine Längsbewegung der Lenksäule 10 im Lenkungsgehäuse 1. Damit sich die Bewegungen gegenseitig nicht beeinflussen, sollte der Verstellmotor 6 am Lenkungsgehäuse 1 in Längsrichtung eine Anlenkung 11 haben, die aber Schwenkbewegungen zulässt. Um Verklemmen der Gewindespindeln 8 und 4 zu vermeiden, ist weiter ein Lagenausgleich 12 am Verstellmotor 6 angebracht.

Damit enthält die Komfortverstellung K Vertikalverstelleinrichtungen V und Längsverstelleinrichtungen H jeweils als Bestandteile und unter Nutzung von Linearstelleinrichmngen M.

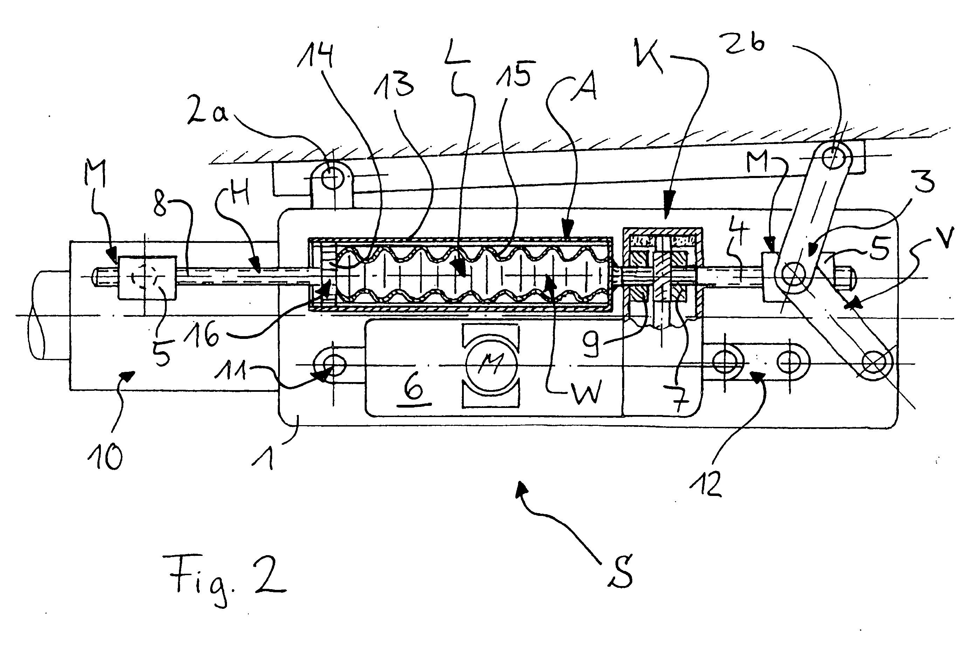

Als Alternative ist im Rahmen eines zweiten Ausführungsbeispieles gemäß der ausschnittweisen Querschnittdarstellung der Fig. 2 in die Längsverstell-Gewindespindel 8 (Vor/Zurück-Bewegung der Lenksäule 10) ein Zylinder 13 eingebaut, wie in der Fig. 2 zu sehen ist. Der Zylinder 13 ist auf einer Seite mit der Vertikalverstell-Kupplung 7 verbunden und auf der Gegenseite mit einem Kolben 14 an der Längsverstell-Gewindespindel 8 angebracht. Der Kolben 14 und der Zylinder 13 sind passend so mit einer Verzahnung 16 versehen, dass der Kolben 14 den Zylinder 13 rotierend mitnimmt, eine Längsverschiebung bei einem Crash oder in einer Unfallsituation jedoch möglich ist.

Um beim Crash für die Längsverschiebung Energie aufnehmen zu können, ist im oder alternativ um dem Zylinder 13 eine Lastabsorption eingebaut. Gezeigt ist hier ein Wellrohr 15 im Zylinder 13. Alternativ sind hier andere, sich verformende Materialien denkbar oder auch eine Flüssigkeit, die durch eine Düse gepresst wird. Allgemein sind der Kolben 14, der Zylinder 13 und das Wellrohr 15 Bestandteile von Lastaufnahmeeinrichtungen L.

Die Fig. 3 zeigt in einer ausschnittweisen Querschnittdarstellung in gegenüber den Fig. 1 und 2 vergrößerter Ansicht ein drittes Ausführungsbeispiel einer Sicherheitslenkung S. Hier ist ein Zylinder 17 zur Energieabsorption bei einem Crash eingesetzt, bei dem ein Kolben 18 als Aufnahmeplatte 19 derart gestaltet ist, dass am Rande derselben, jeweils gegenüber Schälmesser 20 und 25 eingehängt sind. Im gezeigten Beispiel sind alle vier Schälmesser 20, zwei Schälmesser 25 oder kein Schälmesser schaltbar, je nach Crasherfordernissen.

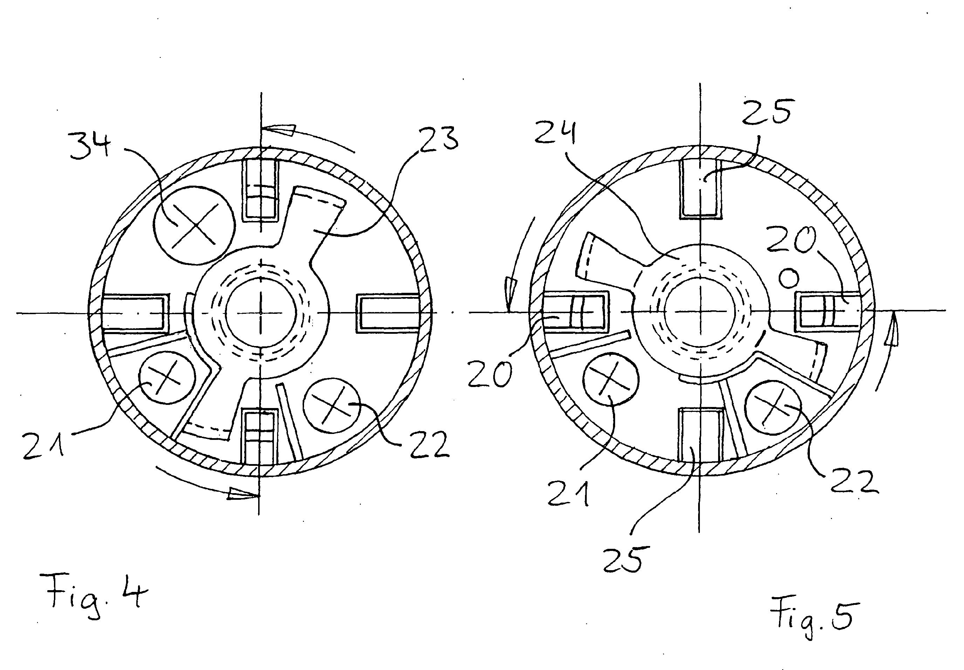

Wenn eine große Person nicht angeschnallt in einen Crash verwickelt wird, werden wegen der hohen aufzunehmenden Last vier Schälmesser 20 und 25 zur Energieaufnahme benötigt und auch eingesetzt. Dazu drehen die beiden pyrotechnischen Ladungen 21 und 22 Schaltbleche 23 und 24 in die Schälmesser 20 und 25 (siehe Fig. 4 und 5). Die Schaltbleche 23 und 24 sind dazu etwas schräg verschränkt. Durch den Druck der Schaltbleche 23 und 24 werden die Schälmesser 20 und 25 derart gegen die Innenwand 26 des Zylinders 17 gedrückt, dass sie sich bei Bewegung des Kolbens 18 in das Material dieser Innenwand 26 "eingraben". Der abgeschälte Span 27 ist auch hinsichtlich seiner Dicke, oder anders ausgedrückt hinsichtlich der Tiefe der dabei erzeugten Nut, exakt vorbestimmt durch einen angeformten Anschlag 26' der Schälmesser 20 und 25 und deren Breite. Der Schälspan 27 erzeugt über die Länge seiner Bewegung eine üblicherweise gewünschte gleichmäßige Lastabsorption. Soll am Ende der Bewegung (z. B. bei schweren Unfällen) die Last ansteigen, wird ein verformbares Element am Ende beigelegt, wie z. B. das Wellrohr 15.

Die vorstehend erläuterten Komponenten mit den Bezugszeichen 17 bis 27 sind beim vorliegenden Ausführungsbeispiel Bestandteile der Lastaufnahmeeinrichtungen L. Die Schälmesser 20 und 25 sowie das Wellrohr 15 sind Bestandteile von Widerstandseinrichtungen W.

Soll bei höherer Aufprallgeschwindigkeit eine höhere Lastabsorption erreicht werden, entsprechend einem stärkeren Crash, kann man Flüssigkeit oder allgemeiner ein Fluid (z. B. Silikonfett ist wenig temperaturabhängig) verwenden und drückt sie/es durch eine Düse (nicht gezeigt). Schnelleres Durchdrücken erzeugt einen höheren Widerstand. Eine durch die Düse durchlaufende Nadel (nicht gezeigt) mit sich veränderndem Durchmesser oder eben konischer Form kann dann z.B. am Kolben 18 befestigt sein und die Lastabsorptionskraft vorbestimmt verändern, angepasst an den Hub.

Bei angeschnallten großen Personen wird z.B. nur ein gegenüberliegendes Paar Schälmesser 20 oder 25 geschaltet. Bei unterschiedlicher Auslegung der Schälmesser sind logischerweise zwei Lastniveaus schaltbar, z. B. auch in Abhängigkeit des Crashpulses. Druckkammern 34 hinter den Schaltblechen sind von einem Deckel 35 verschlossen, der auf der Kolbenstange 32 "beigepackt" ist.

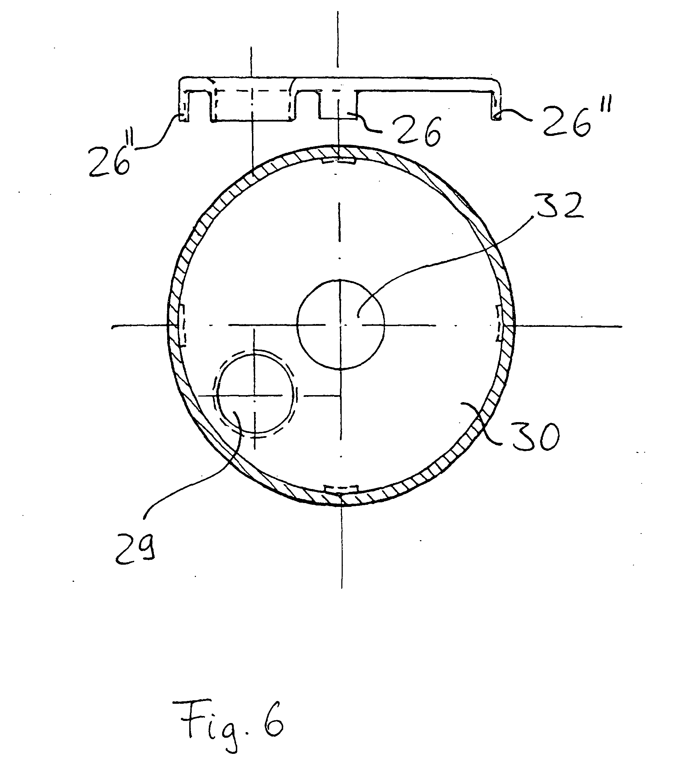

In der Aufnahmeplatte 19 ist eine weitere große pyrotechnische Ladung 28 gemäß der Fig. 4 positioniert, die durch einen Durchgang 29 des Druckgases in einer Blechplatte auf die Oberseite dieser Druckplatte 30 Druck ausübt (siehe Fig. 6), bei Feststellung einer kleinen Person, die dicht vor dem Lenkrad sitzt und keine Lastabsorption benötigt. Die Druckplatte 30 drückt mit ihren Entriegelungsnasen 26" die Schälmesser 20 und 25 wieder in ihre nicht schälende Ausgangslage.

Diese Ausgestaltung, d.h. die Lenksäule 10 nach vorne fahren, basiert auf Rückzugseinrichtungen R, bestehend aus den entsprechenden vorerläuterten Komponenten und wird vorzugsweise bei jedem Crash in seiner zweiten Phase durchgeführt. Die erste Phase besagt, die Insassen sind auf Airbag und Lenkung aufgeschlagen und die Lenkung absorbiert Last. In der genannten zweiten Phase drücken die Aggregate des Kraftfahrzeuges die Stirnwand und die Lenkung in den Innenraum des Kraftfahrzeuges. Hier wird die nach vorne geschobene Lenkung dieser Bewegung eine Gegenbewegung entgegensetzen. Der Zusammenbau aus Aufnahmeplatte 29, Schälmessern 20 und 25, Schaltblechen 23 und 24 sowie der Druckplatte 30 mit ihrer Rückstellfeder 31 ist entsprechend befestigt an der Kolbenstange 32 und gesichert mit z.B. einem Sicherungsring 33. Die Aufnahmeplatte 19 enthält auch alle drei pyrotechnischen Ladungen 21, 22, 28.

Die Lastabsorptionseinrichtungen L und die Rückzugseinrichtungen R sind Bestandteil von Sicherheitseinrichtungen A, die dafür sorgen, dass in einer Unfallsituation wenigstens ein Lenksäulenendbereich (nicht gezeigt) von einer Fahrerposition (nicht gezeigt) wegbewegt werden kann.

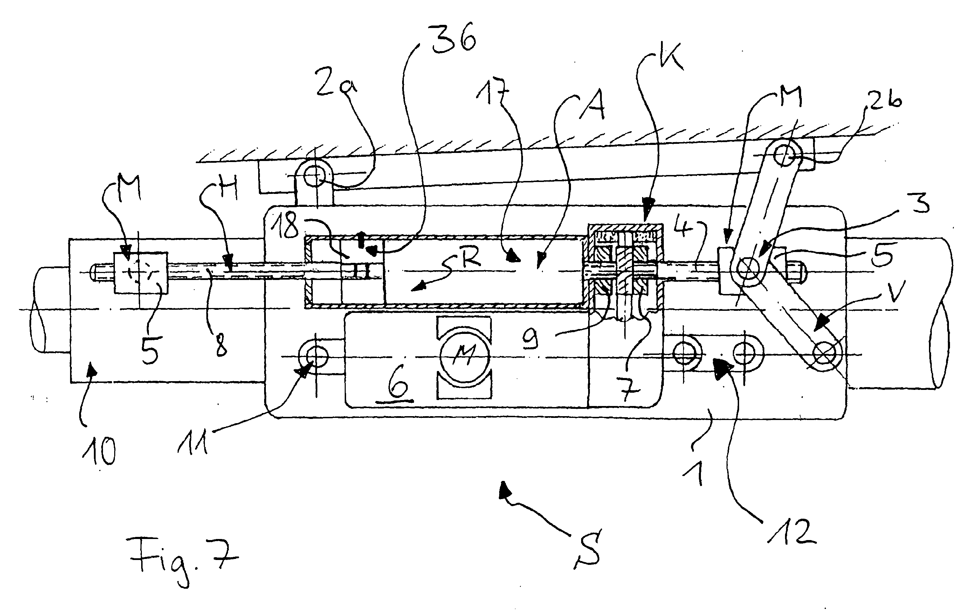

In der Fig. 7 ist im Rahmen eines vierten Ausführungsbeispiels, das in einer ausschnittweisen Querschnittansicht gezeigt ist und weitgehend mit dem gezeigten und erläuterten dritten Ausführungsbeispiel übereinstimmt, so dass eine Erläuterung gleicher oder ähnlicher Komponenten unterlassen wird, verdeutlicht, dass der Kolben 18 mit dem Zylinder 17 über Abreißnieten oder -stiften 36 verbunden ist, wenn der Zylinder 17 Teil der Längsverstell-Gewindespindel 8 ist, um bei einer Komfortverstellung den Gebrauch zu gewährleisten.

Selbstverständlich kann ein solcher "Lastabsorptionszylinder" auch bei mechanisch verstellbaren Lenkungen ebenso zwischen Lenkung und Lenksäule eingesetzt werden. Bei der Lenkungsverstellung bewegt sich der "Kolben" mit allen Anbauten "leer" im Zylinder.

Einen großen Nutzen hat die Erfindung für zukünftige Crashanforderungen bei der Lenkung mit geringem Aufwand.

Die Erfindung ist anhand der Ausführungsbeispiele in der Beschreibung und in den Zeichnungen lediglich exemplarisch dargestellt und nicht darauf beschränkt, sondern umfasst alle Variationen, Modifikationen, Substitutionen und Kombinationen, die der Fachmann den vorliegenden Unterlagen im Rahmen der Ansprüche entnehmen kann.

### Bezeichnungen

- 1: Lenkungsgehäuse
- 2a, 2b: Anlenkung
- 3: Knickhebel
- 4: Vertikalverstell-Gewindespindel
- 5: Mutter
- 6: Verstellmotor
- 7: Vertikalverstell-Kupplung
- 8: Längsverstell-Gewindespindel
- 9: Längsverstell-Kupplung
- 10: Lenksäule
- 11: Anlenkung
- 12: Lagenausgleich
- 13: Zylinder
- 14: Kolben
- 15: Wellrohr
- 16: Verzahnung
- 17: Zylinder
- 18: Kolben
- 19: Aufnahmeplatte
- 20: Schälmesser
- 21: pyrotechnische Ladung für Schaltblech 23
- 22: pyrotechnische Ladung für Schaltblech 24
- 23: Schaltblech
- 24: Schaltblech
- 25: Schälmesser
- 26: Entriegelungsnasen
- 27: Schälspan
- 28: pyrotechnische Ladung zur Längsverstellung
- 29: Durchgang für Druckgas
- 30: Druckplatte
- 31: Rückstellfelder
- 32: Kolbenstange
- 33: Sicherungsring
- 34: Druckkammer
- 35: Deckel
- 36: Abreißniete oder -stifte
- A: Sicherheitseinrichtungen
- H: Längsverstelleinrichtungen
- K: Komfortverstellung
- L: Lastaufnahmeeinrichtungen
- M: Linearstelleinrichtungen
- R: Rückzugseinrichtungen
- S: Sicherheitslenkung
- V: Vertikalverstelleinrichtungen
- W: Widerstandseinrichtungen

## Patentansprüche

1. Sicherheitslenksäule mit einer Lenksäule (10), einer Lenksäulen-Komfortverstellung (K), die Linearstelleinrichtungen (M) enthält, und Sicherheitseinrichtungen (A), die ausgelegt sind, dass in einer Unfallsituation wenigstens ein Lenksäulenendbereich von einer Fahrerposition wegbewegt werden kann, wobei die Linearstelleinrichtungen (M) Lastabsorptionseinrichtungen (L) und/oder Rückzugseinrichtungen (R) bezüglich der Bewegung wenigstens des Lenksäulenendbereichs von einer Fahrerposition weg enthalten,
**dadurch gekennzeichnet,**
**dass** die Linearstelleinrichtungen (M) einen Längsverstellantrieb (8; H) und einen Vertikalverstellantrieb (4; V) und einen gemeinsamen Antriebsmotor (6) für den Längsverstellantrieb (H) und den Vertikalverstellantrieb (V) enthalten, die über Kupplungseinrichtungen (7, 9) alternativ mit dem Antriebsmotor (6) koppelbar sind.

2. Sicherheitslenksäule nach Anspruch 1, **dadurch gekennzeichnet, dass** die Linearstelleinrichtungen(M) einen Spindelantrieb oder einen Zahnstangenantrieb enthalten, und dass die Lastabsorptionseinrichtungen (L) und/oder Rückzugseinrichtungen (R) in eine entsprechende Gewindespindel (4, 8) bzw. eine Zahnstange integriert sind oder sich unmittelbar daran anschliessen.

3. Sicherheitslenksäule nach Anspruch 1 oder 2, **dadurch gekennzeichnet, dass** die Lastabsorptionseinrichtungen (L) wenigstens eine Einheit mit einem Zylinder (13) und einem Kolben (14) enthalten, der in dem Zylinder (13) so verschiebbar ist, dass in einer Unfallsituation wenigstens ein Lenksäulenendbereich von einer Fahrerposition wegbewegt werden kann, und dass im Verschiebeweg des Kolbens (14) im Zylinder (14) Widerstandseinrichtungen (15; 20) zur Lastaufnahme vorgesehen und insbesondere einstellbar sind.

4. Sicherheitslenksäule nach Anspruch 3, **dadurch gekennzeichnet, dass** die Widerstandseinrichtungen (15; 20) zur Lastaufnahme einstellbar sind.

5. Sicherheitslenksäule nach Anspruch 3 oder 4, **dadurch gekennzeichnet, dass** die Widerstandseinrichtungen wenigstens ein stauchbares Wellrohr (15), insbesondere gesteuert und bevorzugt pyrotechnisch oder elektromagnetisch aktivierbare Schälmesser (20) und/oder eine vorzugsweise steuerbare Düsen- oder Ventilanordnung zum entsprechend ggf. steuerbaren Drosseln einer Fluiddurchströmung enthalten.

6. Sicherheitslenksäule nach Anspruch 5, **dadurch gekennzeichnet, dass** die Schälmesser (20) gesteuert und/oder pyrotechnisch oder elektromagnetisch aktivierbar sind, und/oder dass die Düsen- oder Ventilanordnung zum entsprechend steuerbaren Drosseln einer Fluiddurchströmung steuerbar ist.

7. Sicherheitslenksäule nach einem der vorhergehenden Ansprüche, **dadurch gekennzeichnet, dass** die Rückzugseinrichtungen (R) wenigstens eine Einheit mit einem Zylinder (13) und einem Kolben (14) enthalten, der angetrieben in dem Zylinder (14) so verschiebbar ist, dass in einer Unfallsituation wenigstens ein Lenksäulenendbereich von einer Fahrerposition wegbewegt werden kann.

8. Sicherheitslenksäule nach Anspruch 7, **dadurch gekennzeichnet, dass** der Kolben (14) pyrotechnisch angetrieben in dem Zylinder (14) so verschiebbar ist, dass in einer Unfallsituation wenigstens ein Lenksäulenendbereich von einer Fahrerposition wegbewegt werden kann.

9. Sicherheitslenksäule nach Anspruch 7 oder 8, **dadurch gekennzeichnet, dass** die Rückzugseinrichtungen (R) ausgelegt sind, um zu Beginn, während und/oder nach einer Unfallsituation wenigstens den Lenksäulenendbereich von einer Fahrerposition wegzubewegen,

10. Sicherheitslenksäule nach Anspruch 9, **dadurch gekennzeichnet, dass** die Rückzugseinrichtungen (R) ausgelegt sind, um zu Beginn, während und/oder nach einer Unfallsituation wenigstens den Lenksäulenendbereich von einer Fahrerposition steuerbar hinsichtlich Start, Geschwindigkeit und/oder Verstellweglänge wegzubewegen,

11. Sicherheitslenksäule nach Anspruch 9 oder 10, **dadurch gekennzeichnet, dass** wobei die Rückzugseinrichtungen (R) ferner ausgelegt sind, um nach einer vorgebbaren Zeit nach Beginn der Unfallsituation unabhängig von vorangegangenen Rückzugsbewegungen und Lastabsorptionen einen maximalen Rückzug wenigstens des Lenksäulenendbereiches von der Fahrerposition weg einzustellen.

12. Sicherheitslenksäule nach einem der Ansprüche 3 bis 11, **dadurch gekennzeichnet, dass** der Kolben (14) mit dem Zylinder (13) durch eine Umfangsverzahnung (16) drehfest bezüglich einer Drehung um die Längsachse des Zylinders (13) miteinander verbunden sind.

13. Sicherheitslenksäule nach einem der Ansprüche 3 bis 12, **dadurch gekennzeichnet, dass** der Kolben durch Abreissniete (36) jedenfalls bis zum Eintreten einer Unfallsituation verschiebefest und drehfest bezüglich einer Drehung um die Längsachse des Zylinders (13) in dem Zylinder (13) fixiert ist.

14. Sicherheitslenksäule nach einem der vorhergehenden Ansprüche, **dadurch gekennzeichnet, dass** die Lastabsorptionseinrichtungen (L) und/oder die Rückzugseinrichtungen (R) zu Beginn und/oder in einer Unfallsituation insassenabhängig einstellbar und/oder veränderbar sind.

15. Sicherheitslenksäule nach einem der vorhergehenden Ansprüche, **dadurch gekennzeichnet, dass** die Linearstelleinrichtungen (M) ausgelegt sind, eine Verstellung wenigstens des Lenksäulenendbereiches der Lenksäule (10) sowohl längs deren Zentralachse als auch quer dazu in zumindest im wesentlichen Vertikalrichtungen zu ermöglichen.

16. Sicherheitslenksäule nach Anspruch 15, **dadurch gekennzeichnet, dass** der Längsverstellantrieb mit einem Längsverstell-Spindelantrieb oder -Zahnstangenantrieb und der Vertikalverstellantrieb mit einem Vertikalverstell-Spindelantrieb oder -Zahnstangenantrieb ausgestattet ist.

17. Sicherheitslenksäule nach Anspruch 16, **dadurch gekennzeichnet, dass** die Kupplungseinrichtungen ausgelegt sind zwischen den Längs- und Vertikalverstellantrieben hin und her zu schalten oder den Längs- oder Vertikalverstellantrieb konkret jeweils einzeln ein- oder auszuschalten.

18. Sicherheitslenksäule nach Anspruch 17, **dadurch gekennzeichnet, dass** der Längsverstellantrieb(M), insbesondere dessen Längsverstell-Spindelantrieb oder -Zahnstangenantrieb, und der Vertikalverstellantrieb (V), insbesondere dessen Vertikalverstell-Spindelantrieb oder-Zahnstangenantrieb längs einer gemeinsamen Achse hintereinander angeordnet sind, und dass die Kupplungseinrichtungen zwischen den Längs- und Vertikalverstellantrieben (M, V) angeordnet sind, um eine wahlweise Kopplung des Antriebsmotors (6) an den Längs- oder Vertikalverstellantrieb (M; V) zu ermöglichen.

19. Sicherheitslenksäule nach einem der Ansprüche 16 bis 18, **dadurch gekennzeichnet, dass** der Vertikalverstellantrieb (V) eine Hebelanordnung, insbesondere eine Knickhebeloder Scherenanordnung enthält, die so einerseits mit dem Vertikalverstell-Spindelantrieb oder -Zahnstangenantrieb und andererseits einer im Fahrzeug ortsfesten Lagerung gekoppelt ist, dass die Hebelanordnung bei Betätigung des Vertikalverstellantriebes durch Schwenken um die ortsfeste Lagerung im Fahrzeug eine Vertikalbewegung der Lenksäule (10) veranlasst.

20. Sicherheitslenksäule nach Anspruch 19, **dadurch gekennzeichnet, dass** die Hebelanordnung eine Knickhebel- oder Scherenanordnung ist.

21. Betriebsverfahren für eine Sicherheitslenkung (S) mit einer Lenksäule (10), einer Lenksäulen-Komfortverstellung (K), die Linearstelleinrichtungen (M) zum Einstellen der Lenksäule (10) entsprechend den Anforderungen und/oder Wünschen eines Fahrers enthält, und Sicherheitseinrichtungen, (A) mittels denen in einer Unfallsituation wenigstens ein Lenksäulenendbereich von einer Fahrerposition wegbewegt wird, wobei die Bewegung wenigstens des Lenksäulenendbereichs in einer Unfallsituation von einer Fahrerposition weg durch Lastabsorptionseinrichtungen (L) lastaufnehmend gebremst oder durch Rückzugseinrichtungen (R) veranlasst wird,
**dadurch gekennzeichnet,**
**dass** die Linearstelleinrichtungen (M) einen Längsverstellantrieb (8; H) und einen Vertikalverstellantrieb (4; V) enthalten, die zur Komfortverstellung der Lenksäule (10) zum Antrieb alternativ mit einem gemeinsamen Antriebsmotor (10) gekoppelt werden.

22. Betriebsverfahren für eine Sicherheitslenkung (S) nach Anspruch 21, **dadurch gekennzeichnet, dass** eine Sicherheitslenksäule nach einem der Ansprüche 2 bis 20 bestimmungsgemäß betrieben wird.

## Claims

1. Safety steering column with a steering column (10), a steering column comfort adjustment (K) which contains linear adjustment devices (M), and safety devices (A) which are designed so that in an accident situation at least a steering column end region can be moved away from a driver position, wherein the linear adjustment devices (M) contain load absorption devices (L) and / or withdrawing devices (R) in relation to the movement of at least the steering column end region away from a driver position,
**characterised in that**
the linear adjustment devices (M) contain a longitudinal adjustment drive (8; H) and a vertical adjustment drive (4; V) and a common drive motor (6) for the longitudinal adjustment drive (H) and the vertical adjustment drive (V) which can be coupled alternately to the drive motor (6) by means of coupling devices (7, 9).

2. Safety steering column according to claim 1, **characterised in that** the linear adjustment devices (M) contain a spindle drive or a rack-and-pinion drive, and **in that** the load absorption devices (L) and / or withdrawing devices (R) are integrated into a corresponding threaded spindle (4, 8) or a rack or connected directly thereto.

3. Safety steering column according to claim 1 or 2, **characterised in that** the load absorption devices (L) contain at least a unit with a cylinder (13) and a piston (14) which is adapted to be displaced in the cylinder (13) in such a way that in an accident situation at least a steering column end region can be moved away from a driver position, and **in that** in the displacement path of the piston (14) in the cylinder (13) resistance devices (15; 20) are provided for load absorption and in particular can be set.

4. Safety steering column according to claim 3, **characterised in that** the resistance devices (15; 20) can be set for load absorption.

5. Safety steering column according to claim 3 or 4, **characterised in that** the resistance devices contain at least a compressible corrugated tube (15), paring knives (20) which can be actuated particularly in a controlled way and preferably pyrotechnically or electromagnetically and / or a nozzle or valve arrangement for the correspondingly possibly controllable throttling of a fluid throughflow.

6. Safety steering column according to claim 5, **characterised in that** the paring knives (20) are adapted to be actuated in a controlled way and / or pyrotechnically or electromagnetically and / or **in that** the nozzle or valve arrangement is adapted to be controlled for the correspondingly controllable throttling of a fluid throughflow.

7. Safety steering column according to one of the preceding claims, **characterised in that** the withdrawing devices (R) contain at least a unit with a cylinder (13) and a piston (14) which, driven in the cylinder (14), is adapted to be displaced in such a way that in an accident situation at least a steering column end region can be moved away from a driver position.

8. Safety steering column according to claim 7, **characterised in that** the piston (14), pyrotechnically driven in the cylinder (14), is adapted to be displaced in such a way that in an accident situation at least a steering column end region can be moved away from a driver position.

9. Safety steering column according to claim 7 or 8, **characterised in that** the withdrawing devices (R) are designed so that at the start of, during and / or after an accident situation they move at least the steering column end region away from a driver position.

10. Safety steering column according to claim 9, **characterised in that** the withdrawing devices (R) are designed so that at the start of, during and / or after an accident situation they move at least the steering column end region away from a driver position in a controllable way in relation to start, speed and / or length of displacement path.

11. Safety steering column according to claim 9 or 10, **characterised in that** the withdrawing devices (R) are further designed so that after a predefinable time after the start of the accident situation, independently of preceding withdrawing movements and load absorptions, they set a maximum withdrawal at least of the steering column end region away from the driver position.

12. Safety steering column according to one of the claims 3 to 11, **characterised in that** the piston (14) is connected to the cylinder (13) through a peripheral toothing (16) in a rotationally secure way in relation to a rotation about the longitudinal axis of the cylinder (13).

13. Safety steering column according to one of the claims 3 to 12, **characterised in that** the piston is fixed in the cylinder (13) by a tear-off rivet in any case until an accident situation arises in such a way as to be secure against displacement and rotationally secure in relation to rotation about the longitudinal axis of the cylinder (13).

14. Safety steering column according to one of the preceding claims, **characterised in that** the load absorption devices (L) and / or the withdrawing devices (R) can be set and / or changed in an occupant-dependent way at the start of and / or in an accident situation.

15. Safety steering column according to one of the preceding claims, **characterised in that** the linear adjustment devices (M) are designed so as to facilitate an adjustment at least of the steering column end region of the steering column (10) along its central axis and transversely thereto in at least substantially vertical directions.

16. Safety steering column according to claim 15, **characterised in that** the longitudinal adjustment drive is equipped with a longitudinal adjustment spindle drive or rack-and-pinion drive and the vertical adjustment drive is equipped with a vertical adjustment spindle drive or rack-and-pinion drive.

17. Safety steering column according to claim 16, **characterised in that** the coupling devices are designed so as to switch between the longitudinal and vertical adjustment drives or to switch on or off the longitudinal or vertical adjustment drives individually.

18. Safety steering column according to claim 17, **characterised in that** the longitudinal adjustment drive (M), particularly its longitudinal adjustment spindle drive or rack-and-pinion drive, and the vertical adjustment drive (V), particularly its vertical adjustment spindle drive or rack-and-pinion drive, are arranged one behind the other along a common axis, and **in that** the coupling devices are arranged between the longitudinal and vertical adjustment drives (M, V) in order to facilitate optional coupling of the drive motor (6) to the longitudinal or vertical adjustment drive (M; V).

19. Safety steering column according to one of the claims 16 to 18, **characterised in that** the vertical adjustment drive (V) contains a lever arrangement, particularly a bent lever or scissor arrangement which is coupled on the one hand to the vertical adjustment spindle drive or rack-and-pinion drive and on the other hand to a bearing in a fixed location in the vehicle so that the lever arrangement triggers a vertical movement of the steering column (10) upon actuation of the vertical adjustment drive through pivoting about the fixed location bearing in the vehicle.

20. Safety steering column according to claim 19, **characterised in that** the lever arrangement is a bent lever or scissor arrangement.

21. Operating method for safety steering (S) with a steering column (10), a steering column comfort adjustment (K) which contains linear adjustment devices (M) for setting the steering column (10) in accordance with the requirements and / or wishes of a driver, and safety devices (A), by means of which in an accident situation at least a steering column end region is moved away from a driver position, wherein the movement of at least the steering column end region in an accident situation away from a driver position is slowed down in a load-absorbing way through load absorption devices (L) or triggered by withdrawing devices (R),
**characterised in that**
the linear adjustment devices (M) contain a longitudinal adjustment drive (8; H) and a vertical adjustment drive (4; V) which for the comfort adjustment of the steering column (10) for the drive are coupled alternately to a shared drive motor (10).

22. Operating method for safety steering (S) according to claim 21, **characterised in that** a safety steering column is operated in a determined way according to one of the claims 2 to 20.

## Revendications

1. Colonne de direction de sécurité comportant une colonne de direction (10), un réglage de confort (K) de colonne de direction qui contient des système de réglage linéaire (M), et des système de sécurité (A) qui sont conçus de telle sorte que dans une situation d'accident, au moins une zone d'extrémité de colonne de direction peut être éloignée d'une position de conducteur, les systèmes de réglage linéaire (M) contenant des dispositifs d'absorption de charge (L) et/ou des dispositifs de rétraction (R) par rapport au mouvement d'au moins la zone d'extrémité de colonne de direction en éloignement d'une position de conducteur,
**caractérisée en ce que**
les systèmes de réglage linéaire (M) contiennent un entraînement de réglage longitudinal (8 ; H) et un entraînement de réglage vertical (4 ; V) et un moteur d'entraînement (6) commun pour l'entraînement de réglage longitudinal (H) et pour l'entraînement de réglage vertical (V), qui peuvent être couplés en alternance au moteur d'entraînement (6) via des dispositifs de couplage (7, 9).

2. Colonne de direction de sécurité selon la revendication 1, **caractérisée en ce que** les systèmes de réglage linéaire (M) contiennent un entraînement à broche ou un entraînement à crémaillère, et **en ce que** les dispositifs d'absorption de charge (L) et/ou des dispositifs de rétraction (R) sont intégrés dans une broche filetée (4, 8) correspondante ou dans une crémaillère correspondante ou sont branchés directement sur celles-ci.

3. Colonne de direction de sécurité selon la revendication 1 ou 2, **caractérisée en ce que** les dispositifs d'absorption de charge (L) contiennent au moins une unité avec un cylindre (13) et un piston (14) qui peut être déplacé dans le cylindre (13) de telle sorte que dans une situation d'accident, au moins une zone d'extrémité de colonne de direction peut être éloignée d'une position de conducteur, et **en ce que** dans la voie de déplacement du piston (14) dans le cylindre (13) sont prévus des dispositifs de résistance (15 ; 20) pour encaisser la charge, qui sont en particulier réglables.

4. Colonne de direction de sécurité selon la revendication 3, **caractérisée en ce que** les dispositifs de résistance (15 ; 20) sont réglables pour encaisser la charge.

5. Colonne de direction de sécurité selon la revendication 3 ou 4, **caractérisée en ce que** les dispositifs de résistance contiennent au moins un tube ondulé (15) susceptible d'être refoulé, en particulier des rognoirs (20) commandés et de préférence susceptibles d'être activés de manière pyrotechnique ou électromagnétique et/ou un agencement de buses ou de soupapes qui peut de préférence être commandé pour étrangler un écoulement de fluide de manière correspondante et éventuellement de manière commandée.

6. Colonne de direction de sécurité selon la revendication 5, **caractérisée en ce que** les rognoirs (20) peuvent être commandés et/ou activés de manière pyrotechnique ou électromagnétique, et/ou ce que l'agencement de buses ou de soupapes qui peut de préférence être commandé pour étrangler un écoulement de fluide de manière correspondante et commandée.

7. Colonne de direction de sécurité selon l'une des revendications précédentes, **caractérisée en ce que** les dispositifs de rétraction (R) contiennent au moins une unité avec un cylindre (13) et un piston (14) qui, entraîné dans le cylindre (13), peut être déplacé de telle sorte que dans une situation d'accident, au moins une zone d'extrémité de colonne de direction peut être éloignée d'une position de conducteur.

8. Colonne de direction de sécurité selon la revendication 7, **caractérisée en ce que** le piston (14) entraîné de manière pyrotechnique dans le cylindre (13) peut être déplacé de telle sorte que dans une situation d'accident, au moins une zone d'extrémité de colonne de direction peut être éloignée d'une position de conducteur.

9. Colonne de direction de sécurité selon la revendication 7 ou 8, **caractérisée en ce que** les dispositifs de rétraction (R) sont conçus pour, au début, pendant et/ou après une situation d'accident, éloigner au moins une zone d'extrémité de colonne de direction d'une position de conducteur.

10. Colonne de direction de sécurité selon la revendication 9, **caractérisée en ce que** les dispositifs de rétraction (R) sont conçus pour, au début, pendant et/ou après une situation d'accident, éloigner au moins la zone d'extrémité de colonne de direction d'une position de conducteur de manière commandable du point de vue du départ, de la vitesse et/ou de la longueur de la course de réglage.

11. Colonne de direction de sécurité selon l'une des revendications 9 ou 10, **caractérisée en ce que** les dispositifs de rétraction (P) sont en outre conçus pour, après une durée prédéterminable après le début d'une situation d'accident indépendamment des mouvements de rétraction précédents et des absorptions de charge précédentes, régler une rétraction maximum de la zone d'extrémité de colonne de direction en éloignement de la position de conducteur.

12. Colonne de direction de sécurité selon l'une des revendications 3 à 12, **caractérisée en ce que** le piston (14) et le cylindre (13) sont reliés l'un à l'autre par une denture périphérique (16) de manière solidaire en rotation par rapport à une rotation autour de l'axe longitudinal du cylindre (13).

13. Colonne de direction de sécurité selon l'une des revendications 3 à 12, **caractérisée en ce que** le piston est fixé dans le cylindre (13) par des rivets de rupture (36) en tout cas jusqu'à l'apparition d'une situation d'accident, de manière solidaire au déplacement et solidaire à la rotation par rapport à une rotation autour de l'axe longitudinal du cylindre (13).

14. Colonne de direction de sécurité selon l'une des revendications précédentes, **caractérisée en ce que** les dispositifs d'absorption de charge (L) et/ou les dispositifs de rétraction (R) peuvent être réglés et/ou modifiés en fonction des occupants au début et/ou dans une situation d'accident.

15. Colonne de direction de sécurité selon l'une des revendications précédentes, **caractérisée en ce que** les système de réglage linéaire (M) sont conçus manière à permettre un réglage d'au moins la zone d'extrémité de la colonne de direction (10) tant le long de son axe central que transversalement à celui-ci dans au moins des directions sensiblement verticales.

16. Colonne de direction de sécurité selon la revendication 15, **caractérisée en ce que** l'entraînement de réglage longitudinal est équipé d'un entraînement à broche de réglage longitudinal ou d'un entraînement à crémaillère de réglage longitudinal et l'entraînement de réglage vertical est équipé d'un entraînement à broche de réglage vertical ou d'un entraînement à crémaillère de réglage vertical.

17. Colonne de direction de sécurité selon la revendication 16, **caractérisée en ce que** les dispositifs de couplage sont conçus pour commuter en va-et-vient entre les entraînements de réglage longitudinal et vertical ou pour mettre en marche ou arrêter l'entraînement de réglage longitudinal et vertical individuellement de façon concrète.

18. Colonne de direction de sécurité selon la revendication 17, **caractérisée en ce que** l'entraînement de réglage longitudinal (M), en particulier son entraînement à broche de réglage longitudinal ou son entraînement à crémaillère de réglage longitudinal, et l'entraînement de réglage vertical (V), en particulier son entraînement à broche de réglage vertical ou son entraînement à crémaillère de réglage vertical sont agencé l'un derrière l'autre le long d'un axe commun, et **en ce que** les dispositifs de couplage sont agencés entre l'entraînement de réglage longitudinal et l'entraînement de réglage vertical (M ; V) pour permettre un couplage sélectif du moteur d'entraînement (6) avec l'entraînement de réglage longitudinal ou avec l'entraînement de réglage vertical (M ; V).

19. Colonne de direction de sécurité selon l'une des revendications 16 à 18, **caractérisée en ce que** l'entraînement de réglage vertical (V) contient un agencement de levier, en particulier un agencement de levier articulé ou de cisaille qui est accouplé d'une part à l'entraînement à broche de réglage vertical ou à l'entraînement à crémaillère de réglage vertical et, d'autre part, à une monture stationnaire dans le véhicule de telle manière que l'agencement de levier, lorsque l'entraînement de réglage vertical est actionné par pivotement autour de la monture stationnaire dans le véhicule, provoque un mouvement vertical de la colonne de direction (10).

20. Colonne de direction de sécurité selon la revendication 19, **caractérisée en ce que** l'agencement de levier est un agencement de levier articulé ou de cisaille.

21. Procédé de fonctionnement pour une direction de sécurité (S) avec une colonne de direction (10), un réglage de confort (K) de colonne de direction qui contient des système de réglage linéaire (M) pour régler la colonne de direction (10) selon les exigences et/ou les souhaits d'un conducteur, et avec des système de sécurité (A) au moyen desquels, dans une situation d'accident, au moins une zone d'extrémité de colonne de direction est éloignée d'une position du conducteur, le mouvement d'au moins la zone d'extrémité de colonne de direction en éloignement de la position du conducteur, dans une situation d'accident, est freiné par des dispositifs d'absorption de charge (L) en encaissant la charge ou est provoqué par des dispositifs de rétraction (R),
**caractérisé en ce que**
les systèmes de réglage linéaire (M) contiennent un entraînement de réglage longitudinal (8 ; H) et un entraînement de réglage vertical (4 ; V) qui, pour réaliser un réglage de confort de la colonne de direction (10) par rapport à l'entraînement, sont couplés en alternance à un moteur d'entraînement (10) commun.

22. Procédé de fonctionnement pour une direction de sécurité (S) selon la revendication 21, **caractérisé en ce qu'**une colonne de direction de sécurité selon l'une des revendications 2 à 20 fonctionne de manière conforme à sa destination.
